# EUROPÄISCHE PATENTSCHRIFT

(11) **EP 2 445 830 B1**
(45) Veröffentlichungstag und Bekanntmachung des Hinweises auf die Patenterteilung: **27.01.2016**
(21) Anmeldenummer: 10765566.4
(22) Anmeldetag: 24.06.2010
(51) Int. Cl.: C01B 3/38, B01J 8/06

(54) **PRIMÄRREFORMER MIT VARIABLEM RAUCHGASSTROM**
PRIMARY REFORMER HAVING VARIABLE SMOKE GAS FLOW
REFORMEUR PRIMAIRE À FLUX DE FUMÉES VARIABLE

(30) Priorität: 24.06.2009 DE 102009030480; 21.06.2010 DE 102010024539
(43) Veröffentlichungstag der Anmeldung: 02.05.2012
(73) Patentinhaber: ThyssenKrupp Industrial Solutions AG, 45143 Essen (DE)
(72) Erfinder: MEISSNER, Oliver, 45966 Gladbeck (DE); VON TROTHA, Thilo, 59379 Selm (DE)
(74) Vertreter: Brosch, Oliver
(86) Internationale Anmeldenummer: PCT/EP2010/003793
(87) Internationale Veröffentlichungsnummer: WO 2010/149361

(56) Entgegenhaltungen:
- EP-A1- 1 634 856
- EP-A2- 0 643 020
- DE-B3-102007 019 830
- A. KOHL, R. NIELSEN: "Gas Purification", GULF PUBLISHING COMPANY, 12. Dezember 1997 (1997-12-12), XP040425485, Houston, Texas

## Beschreibung

Die Erfindung betrifft einen deckengefeuerten Primärreformer sowie ein Verfahren zur katalytischen Reformierung von Kohlenwasserstoffen mit Wasserdampf unter erhöhtem Druck, mit dem Synthesegas hergestellt wird. Derartiges Synthesegas dient beispielsweise zur Herstellung von Ammoniak, Wasserstoff und Methanol. Dabei ist der Primärreformer so konstruiert, dass dieser der Entstehung von schädlichen Stickoxiden im Rauchgas entgegengewirkt.

Reaktoren zur katalytischen Reformierung von Kohlenwasserstoffen mit Wasserdampf sind seit langem und in einer Vielzahl von Ausführungsformen bekannt. Bei Großanlagen hat sich eine Bauart durchgesetzt, bei der ein deckengefeuerter Kastenofen mit senkrecht stehenden Reaktionsrohren bzw. Spaltrohren zum Einsatz kommt. Hierbei sind die Spaltrohre in Reihen angeordnet. Die Rohre werden mit Prozessgas, welches das Einsatzgas bildet, von oben nach unten durchströmt. Das Einsatzgas wird dabei einem sogenannten Spaltprozess unterzogen.

Die Gasaustrittstemperaturen liegen üblicherweise bei 850 °C und darüber. Das Prozessgas wird im unteren Bereich - inner- oder außerhalb des Ofens - in sogenannten Austrittskollektoren gesammelt. In den zwischen den Rohrreihen liegenden "Gassen" sind senkrecht nach unten feuernde Brenner angeordnet. Dieser Bereich wird als Ofenbox bezeichnet. Die Temperaturen in der Ofenbox liegen im Durchschnitt bei 1000 bis 1250 °C. Die Ofenwände sind zur Wärmeisolierung und zum Schutz vor den durch die Beheizung vorherrschenden hohen Temperaturen mit einer feuerfesten Schutzschicht ausgekleidet.

Der Ofenraum, in dem die Befeuerungsvorrichtungen angeordnet sind, besitzt im unteren Bereich des Raumes eine Kammer zum Sammeln der Rauchgase sowie eine Vielzahl von im wesentlichen waagerecht angeordneten, parallel zueinander und rechtwinklig zu den vertikalen Rohren verlaufenden Tunneln aus Mauerwerk. Das erzeugte Rauchgas durchströmt die Ofenbox von oben nach unten und wird durch diese am Boden liegenden Rauchgastunnel, die an den Seiten Öffnungen aufweisen, abgezogen.

Die WO2005/018793 A1 beschreibt ein typisches Ofensystem und Verfahren zur katalytischen Reformierung von Kohlenwasserstoffen mit Wasserdampf zu Synthesegas unter erhöhtem Druck. Zur besseren Vergleichmäßigung der Rauchgasströmung und für eine gleichmäßigere Temperaturverteilung der Befeuerung wird eine spezielle Ausgestaltung der Außenwände der Tunnel angewendet. WO2006/119812 A1 beschreibt ein typisches Ofensystem und Verfahren zur katalytischen Reformierung von Kohlenwasserstoffen mit Wasserdampf zu Synthesegas mit Zufuhr von Sauerstoff zur Anpassung der Stöchiometrie und einem speziellen nachgeschalteten Porenbrenner zur Vermeidung der Russbildung.

Alle beschriebenen Reformiersysteme haben gemeinsam, dass eine Befeuerungseinrichtung, die aus einer Vielzahl von zwischen den prozessführenden Reaktionsrohren angeordneten Brennern besteht, den Ofenraum mit den durch diesen führenden Reformierrohren beheizt. Die der Befeuerung des Ofenraumes dienenden Brenner werden üblicherweise über getrennte Kanäle mit Heizgas und Luft gespeist. Die Zuführung des Heizgases in den Brennerraum wird dabei getrennt von der Luftzuführung ausgeführt. Der Durchtritt der Gaszuführungen in den Brennerraum erfolgt durch die feuerfeste Ofenauskleidung oder unmittelbar davor. Dabei wird das Heizgas-Luft-Verhältnis für die Brenner durch eine Drosselklappe oder eine ähnlich geartete Einrichtung zur Einstellung des Gasdurchflusses der Luftzuführung gesteuert. Über diese Einrichtung lassen sich die Brennerbefeuerung und damit die Ofentemperatur kontrollieren.

Das Sauerstoff-Heizgas-Verhältnis kann technisch durch den sogenannten Lambda(λ)-wert beschrieben werden. Bei Einsatz eines stöchiometrischen Molverhältnisses von Sauerstoff zu Heizgas erhält man einen Lambda-Wert von 1,0. Bei Verwendung eines im stöchiometrischen Verbrennungsverhältnis geringeren Sauerstoffanteils erhält man einen Lambda-Wert, der niedriger ist als 1,0. Bei Verwendung eines im stöchiometrischen Verbrennungsverhältnis höheren Sauerstoffanteils erhält man einen Lambda-Wert, der höher ist als 1,0. Eine Verbrennung ist daher optimal, wenn der Lambda-Wert 1,0 beträgt. Bei herkömmlichen Konstruktionen erhält man an den einzelnen Brennern Lambda-Werte, die betriebsbedingt schwanken und temporär erhöhte Werte aufweisen können.

Dies wirkt sich nachteilig auf den Verbrennungsprozess aus. Die Folge ist möglicherweise ein insgesamt höherer Verbrauch an Heizgas bezogen auf den Umsatz des Reformierprozesses. Bei einem Wechsel des Brennstoffes lässt sich die Luftzuführung nur schwer auf die veränderte Stöchiometrie einstellen. Dadurch kann es temporär zu einer ungewollten Erhöhung der Flammentemperatur und mit dem erhöhten Zufluss an Luft zu einer verstärkten Bildung von Stickoxiden des Typus NOₓ kommen. Stickoxide tragen als Schadstoffe in der Atmosphäre zum sauren Regen bei.

Es ist bekannt, dass sich der Stickoxidgehalt NOₓ eines Abgases bei Verwendung eines günstigeren Lambda-Wertes am Brennerstein deutlich erniedrigt. Auch ist bekannt, dass sich der Stickoxidgehalt NOₓ eines Abgases bei Einstellung einer niedrigeren Flammentemperatur deutlich erniedrigt. Dies kann einschlägig bekannten Nachschlagewerken entnommen werden. Beispielhaft sei hier die Lehre "The John Zink Combustion Handbook", C.E. Baukel Jr., CRC-Press, London New York, 2001, genannt. Eine optimierte Einstellung des Luft-Heizgas-Verhältnisses an den Brennern und einer optimalen Steuerung der Verbrennung im Hinblick auf die Einstellung eines optimalen Lambda-Wertes ist deshalb von essentieller Bedeutung bei der Reduktion von Stickoxiden bei der Synthesegasherstellung.

Bei bestimmten Betriebszuständen, wie beispielsweise im Teillastbetrieb besteht bei den beschriebenen Ausführungen des Standes der Technik zudem das Problem, dass die Menge des entstehenden Rauchgases durch Erhöhung des Luftüberschusses angehoben werden muss, um die Wärmeübertragung in der dem Reformer nachgeschalteten Abhitzestrecke den Erfordernissen des Betriebs der Gesamtanlage anzupassen. Der erhöhte Luftüberschuss wirkt sich negativ auf die Entstehung von Stickoxiden im Rauchgas aus.

Die WO2008/131832 A1 beschreibt einen Reaktor zur katalytischen Reformierung von Kohlenwasserstoffen mit Wasserdampf unter erhöhtem Druck, aufweisend einen Reaktionsraum und einen Befeuerungsraum, dabei als Reaktionsraum eine Vielzahl von vertikalen Rohren, welche in Reihen angeordnet und zum Füllen mit Katalysator geeignet sind, und Einrichtungen zum Zuführen von zu reformierenden Kohlenwasserstoffen und Wasserdampf zum Reaktionsraum, sowie Einrichtungen zum Abführen reformierten Synthesegases aus dem Reaktionsraum, dabei weiterhin im oberen Bereich des Befeuerungsraums aufweisend eine Vielzahl von Befeuerungseinrichtungen, welche im wesentlichen abwärts gerichtete Flammen erzeugen können, welche geeignet sind, die oben genannten Reaktionsrohre zu beheizen, wobei das dem Brenner luftzuführende Rohr mit einer Einrichtung zur Einstellung des Luftdurchflusses versehen ist und zusätzlich zu diesem Rohr eine davon abzweigende Sekundärluftzuführung angebracht ist, die in verschiedenartiger Ausführungsform gestaltet sein kann und die eine unabhängig steuerbare Einrichtung zur Einstellung des Luftdurchflusses besitzt und der Befeuerungseinrichtung ebenfalls Luft zuführt, so dass sich an den Brennern ein günstigeres Verhältnis von Heizgas zu Luft ergibt und damit ein stickoxidarmes Abgas erreicht werden kann.

Nachteilig an dieser Ausgestaltung ist, dass die Brenner selbst sehr aufwendig umgestaltet werden müssen, um diese mit den oben beschriebenen Sekundäreinlasskanälen für Luft auszustatten.

Aufgabe der Erfindung ist es im Kontext der oben diskutierten Problematik daher, eine verbesserte Konstruktion des Primärreformers zu finden, die die aufgezeigten Nachteile der Brennerumgestaltung nicht mehr aufweist und mit dieser optimale Lambda-Werte gewährleistet werden können, so dass die Bildung der schädlichen Stickoxide deutlich verringert werden kann. Zudem soll auch im Fall bestimmter Betriebszustände, wie beispielsweise denen im Falle eines Teillastbetriebes des Primärreformers eine optimale Wärmeausnutzung der im Rauchgas enthaltenen Wärme gewährleistet werden.

Die Erfindung löst die Aufgabe durch einen Reaktor zur katalytischen Primärreformierung von Kohlenwasserstoffen mit Wasserdampf unter erhöhtem Druck, aufweisend ein Spaltrohrsystem und einen Befeuerungsraum,
- wobei das Spaltrohrsystem als Reaktionsraum eine Vielzahl von vertikalen Rohren, welche in Reihen angeordnet und zum Füllen mit Katalysator geeignet sind und Einrichtungen zum Zuführen von zu reformierenden Kohlenwasserstoffen und Wasserdampf zum Reaktionsraum sowie Einrichtungen zum Abführen reformierten Synthesegases aus dem Reaktionsraum besitzt,
- dabei weiterhin im oberen Bereich des Befeuerungsraums aufweisend eine Vielzahl von parallel zueinander angeordneten Befeuerungseinrichtungen,
   - die jeweils zwischen den Spaltrohren angeordnet sind und die aus einer Vielzahl in Reihe angeordneter Brenner bestehen,
   - wobei die Brenner im wesentlichen abwärts gerichtete Flammen erzeugen können,
   - welche geeignet sind, die oben genannten Rohre zu beheizen,
- die jeweiligen Befeuerungseinrichtungen über Zuführungsvorrichtungen mit Heizgas und Luft gespeist werden, wobei die Luft aus den jeweiligen Zuführungen abgezogen wird,
- sich im unteren Bereich des Befeuerungsraumes eine Vielzahl von im wesentlichen waagerecht angeordneten, parallel zueinander und rechtwinklig zu den vertikalen Spaltrohren verlaufenden Rauchgastunneln aus keramischen Werkstoffen zum Abzug der Rauchgase durch Öffnungen in den Seitenwänden der Rauchgastunnel befinden,
   - die jeweils einer Reihe aus Befeuerungseinrichtungen zugeordnet sind, und
   - die Rauchgastunnel am Austritt des Befeuerungsraumes in Vorrichtungen münden, die zur Wärmerückgewinnung mit Wärmetauschern versehen sind, und
- stirnseitig jeder einzelne der Rauchgastunnel in Strömungsrichtung der abgezogenen Rauchgase Zuführungseinrichtungen für ein Zusatzgas, welches sowohl Sauerstoff als auch ein nichtbrennbares Gas enthält, aufweist, so dass das in die Rauchgastunnel geleitete Zusatzgas den Rauchgastunnel auf ganzer Länge des Befeuerungsraums durchläuft, und
- wobei jede einzelne der Zuführungseinrichtungen für das Zusatzgas Vorrichtungen zur Regulation des Zusatzgasstroms aufweist,
- wobei die Zuführungseinrichtungen (5) von Luft zum Brenner (3) Verlängerungen (24) aufweisen, die in die Zuführungseinrichtungen für Zusatzgas in die Rauchgastunnel münden.

In einer bevorzugten Ausführungsform der Erfindung ist eine Abzweigung von Luft aus dem Weg der Luftvorwärmung der Luft, die als Verbrennungsluft vorgesehen ist, zu den Zuführstellen für Zusatzgas eingerichtet.

In einer weiteren bevorzugten Ausführungsform der Erfindung ist eine Druckerhöhungsvorrichtung für Zusatzgas nach der Abzweigung von Luft aus dem Weg der Luftvorwärmung der Luft, die als Verbrennungslüft vorgesehen ist, eingerichtet.

Die Aufgabe der Erfindung wird auch gelöst durch ein Verfahren zur katalytischen Primärreformierung von Kohlenwasserstoffen mit Wasserdampf unter erhöhtem Druck mittels einem Reaktor wie oben beschrieben, aufweisend ein Spaltrohrsystem und einen Befeuerungsraum, wobei
- im Spaltrohrsystem, das mit einem Katalysatormaterial befüllt ist, zu reformierende Kohlenwasserstoffe mittels Wasserdampf zu Synthesegas umgesetzt werden,
- wobei das Spaltrohrsystem mittels einer Vielzahl von Befeuerungseinrichtungen aufgeheizt wird, die jeweils zwischen den Spaltrohren angeordnet sind und welche aus einer Vielzahl von in Reihe angeordneter Brenner bestehen, wobei die Brenner im Wesentlichen abwärts gerichtete Flammen erzeugen können,
- die jeweiligen Befeuerungseinrichtungen mit Heizgas und Luft gespeist werden, wobei die Luft aus Zuführungen abgezogen wird, und
- das entstehende Rauchgas den Befeuerungsraum von oben nach unten durchströmt und im unteren Bereich des Befeuerungsraumes in im Wesentlichen waagerecht angeordnete, parallel zueinander, rechtwinklig zu den vertikalen Spaltrohen verlaufende und jeweils einer Befeuerungseinrichtung zugeordnete Rauchgastunnel aus keramischem Werkstoff durch Öffnungen in den Seitenwänden der Rauchgastunnel eintritt, und
- das Rauchgas am Austritt des Befeuerungsraums in Vorrichtungen geleitet wird, die zur Wärmerückgewinnung genutzt werden,
- stirnseitig in jeden einzelnen der Rauchgastunnel in Strömungsrichtung der abgezogenen Rauchgase durch Zuführungseinrichtungen ein vorgewärmtes Zusatzgas, welches sowohl Sauerstoff als auch ein nichtbrennbares Gas enthält, eingeleitet wird, so dass das in die Rauchgastunnel geleitete Zusatzgas den Rauchgastunnel auf ganzer Länge des Befeuerungsraums durchläuft, und
- wobei die jeweils zugeführte Menge an Zusatzgas jeweils geregelt wird, wobei als Zusatzgas Brennerluft abgezweigt wird.

In einer Ausgestaltung der Erfindung wird als Zusatzgas Luft eingesetzt. Weiterhin ist es im Rahmen eines Anlagenverbundes auch möglich, verschmutzte, sauerstoffhaltige Gasströme zu verwenden, bei denen die hohen Temperaturen in den Rauchgastunneln zum Abbau der Verschmutzungen führen würden. Derartige weitere Gasströme können auch zugemischt werden.

Die Menge des Zusatzgases wird in einer Ausgestaltung der Erfindung über Klappen oder Ventile eingestellt, ferner ist vorteilhaft eine Differenzmengenmessung zwischen Gesamtluft und Zusatzgas für die Rauchgastunnel durchzuführen.

Die Erfindung wird nachstehend anhand von 3 Figuren näher erläutert. Es zeigen:
- Fig. 1:: Einen Querschnitt einer erfindungsgemäßen Ausführungsform eines Primärreformers
- Fig. 2:: Eine Verfahrensskizze für eine vorteilhafte Zugabe von Zusatzgas
- Fig. 3:: Einen Längsschnitt einer erfindungsgemäßen Ausführungsform eines Primärreformers
- Fig. 4:: Eine Außensicht einer erfindungsgemäßen Ausführungsform eines Primärreformers

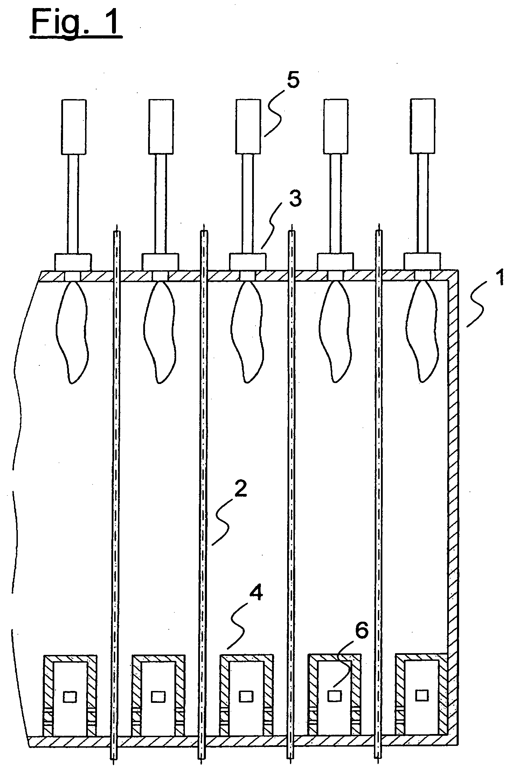

In Fig. 1 ist eine Ansicht eines erfindungsgemäßen Ausführungsbeispiels eines Reaktors zur katalytischen Primärreformierung dargestellt, der aus einem Befeuerungsraum 1 und einem Spaltrohrsystem, das aus einer Vielzahl von Spaltrohren 2 aufgebaut ist, die in Reihe angeordnet sind. Während des bestimmungsgemäßen Betriebes sind diese Spaltrohre 2 mit Katalysatormaterial gefüllt und werden von Einsatzgas bzw. Synthesegas durchströmt. Im Deckenbereich des Befeuerungsraumes 1 sind ferner eine Vielzahl von Brennern 3 in Reihe angeordnet, die die Spaltrohre während des bestimmungsgemäßen Betriebes befeuern. Im unteren Bereich des Befeuerungsraumes 1 befinden sich Rauchgastunnel 4 für den Rauchgasabzug, wobei jeder Brennerreihe ein solcher Rauchgastunnel 4 zugeordnet ist. Diese Rauchgastunnel 4 besitzen in den Seitenwänden Öffnungen für die Einleitung der von den Brennern 3 erzeugten Rauchgase. Jeder der Brenner 3 ist verbunden mit Zuführungsvorrichtungen für Luft 5 und Heizgas (nicht gezeigt), wobei die Zufuhr der Luftmenge zu jedem Brenner 3 regulierbar sein kann (nicht gezeigt). Bis zu diesem Punkt handelt es sich bei der in Fig. 1 dargestellten Ausführungsform um bekannten Stand der Technik.

Erfindungsgemäß besitzt der Primärreformer Zuführungseinrichtungen für Zusatzgas 6, die am Eintritt des Befeuerungsraums 1 in die Rauchgastunnel 4 münden. Dadurch durchläuft das in die Rauchgastunnel 4 geleitete Zusatzgas diese Rauchgastunnel komplett und wird somit auf eine zum Rauchgas homogene Temperatur gebracht, bevor dieser Gesamtgasstrom auf Wärmetauscher trifft und dazu verwendet wird, beispielsweise das zu reformierende Gas und/oder die zum Heizen verwendete Luft vorzuwärmen.

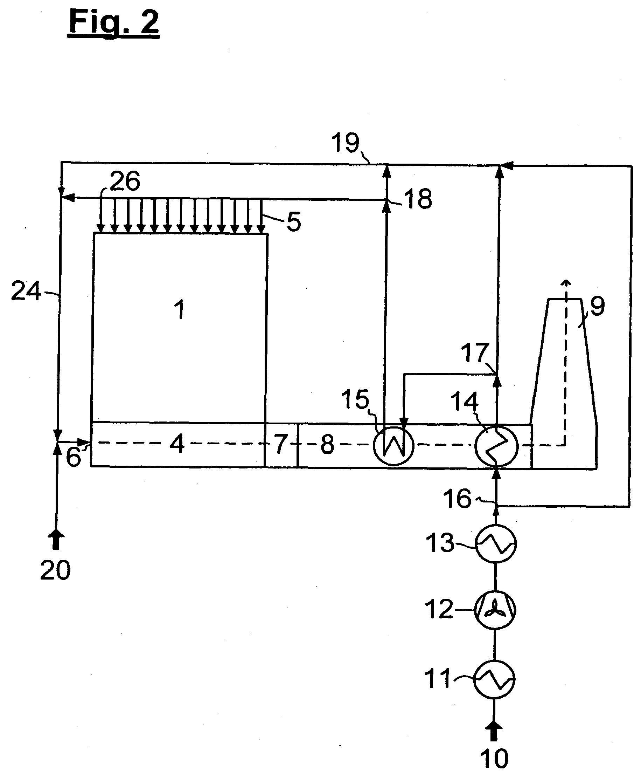

Fig. 2 zeigt schematisch einen Befeuerungsraum 1 mit Ofenbox, die unten gelegenen Rauchgastunnel 4, deren Sammler 7, sowie den aus ihm führenden Rauchgaskanal 8 zum Schornstein 9, ferner den Weg der Luftvorwärmung und den des Rauchgases (gestrichelte Linie).

In Fig. 2 wird Umgebungsluft 10 angesaugt und in einem ersten Luftvorwärmer 11 leicht vorgewärmt. Danach wird sie von einem Fördergebläse 12 durch den zweiten Luftvorwämer 13 geleitet, im dem die Luft weiter erhitzt wird, bevor sie in die Wärmetauscher 14 und 15, welche beide in den Rauchgaskanal 8 integriert sind, auf die Temperatur vorgeheizt werden, die die Brenner 3 (in Fig. 2 nicht gezeigt, siehe hierzu Fig. 1) des Primärreformers für ihren Betrieb benötigen. Aus dieser Luft für die Brenner 3 wird das Zusatzgas abgezweigt. Für diese Abzweigung stehen die Abzweigstellen 16 nach oder vor dem zweiten Luftvorwärmer 13, 17 nach dem Wärmetauscher 14 und 18 nach dem Wärmetauscher 15 alternativ zur Verfügung. Weiterhin kann das Zusatzgas direkt hinter der Zuführung der Brennerluft an der Abzweigstelle 26 abgezweigt werden und über die Verlängerungen 24 in die Zuführungseinrichtung für Zusatzgas 6 geführt werden. Das vorgewärmte Zusatzgas 19 wird mit einem Restgas 20 vermischt und in die Rauchgastunnel 4 eingeleitet. Dort führt es erfindungsgemäß zur Stickoxidreduzierung. Das aus den Rauchgastunneln 4 abgeführte Rauchgas wird im Sammler 7 zusammengeführt und durch den Rauchgaskanal 8 zum Schornstein 9 geführt.

Es versteht sich von selbst, dass auch das Zusatzgas in weiteren Wärmetauscheinrichtungen innerhalb des Rauchgastunnels vorgewärmt werden kann. Außerdem können die in Fig. 2 gezeigten Verfahrens- und Vorrichtungsvarianten nicht nur alternativ, sondern auch additiv zum Einsatz kommen. Nachfolgend soll die Erfindung anhand eines Ausführungsbeispiels näher erläutert werden.

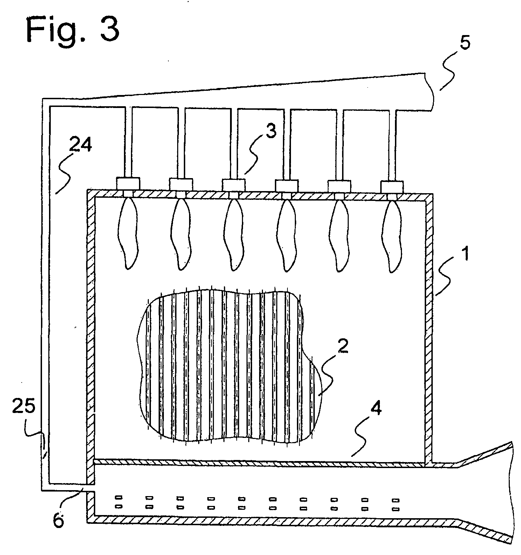

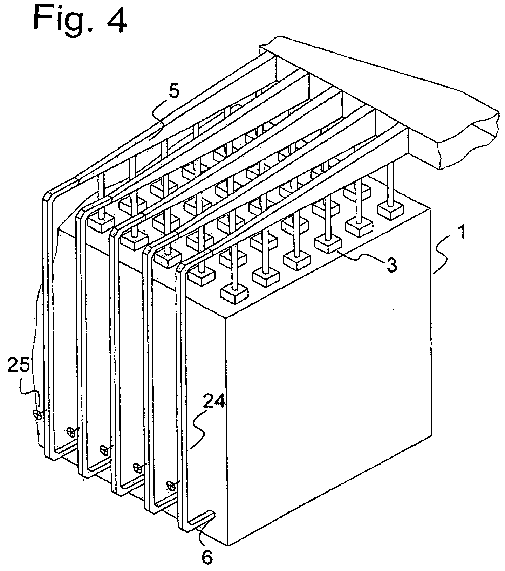

Fig. 3 und 4 und betreffen eine Ausführungsvariante, bei der der Primärreformer Zuführungseinrichtungen 5 für Luft besitzt, die jeweils Verlängerungen 24 aufweisen, die am Eintritt von Zusatzgas 6 des Befeuerungsraums 1 in die Rauchgastunnel 4 münden. Hieraus gehen die zur Regulation der Menge des Luftstromes, der in die Rauchgastunnel 4 geleitet wird, notwendigen Einrichtungen 25 hervor. Durch die Möglichkeit der Regulation wird sichergestellt, dass bei bestimmten Betriebszuständen wie beispielsweise im Teillastbetrieb eines solchen Primärreformers, der Lambda-Wert an den Brennern und die Rauchgasmenge unabhängig voneinander eingestellt werden und somit sowohl die Stickoxidentstehung im Befeuerungsraum minimiert als auch die Wärmeübertragung an die dem Reformer nachgeschalteten Wärmetauscher optimiert werden kann. Dies ist ein essentieller Vorteil zum bisherigen Stand der Technik, bei dem bei bestimmten Betriebszuständen wie im Teillastbetrieb die Wärmeübertragung auf andere Medien zu erhöhten Stickoxidemissionen kommt. D.h. es wird die in den Zuführungseinrichtungen 5 enthaltene Luft, die nach dem Einstellen eines optimalen Lambda-Wertes an den einzelnen Brennern noch in den Zuführungsvorrichtungen 5 vorhanden ist, in die Rauchgastunnel 4 weitergeleitet, womit zusätzlich zur optimalen Wärmeübertragung eine Reduktion der Stickoxidentstehung im Rauchgas erreicht wird.

In einer Anlage zur Erzeugung von Synthesegas muss nach dem Stand der Technik bei einem Wechsel des Einsatzgases zur Reformierung die Rauchgasmenge durch Anheben des Luftüberschusses von einem Lambda-Wert von 1,1 auf 1,25 vergrößert werden. Dies führt nach Testergebnissen an den Brennern zu einer Erhöhung der Stickoxidemission um 30% von 24ppm auf 34ppm. Dabei handelt es sich um trockenes Rauchgas, das einen Sauerstoffgehalt von 3 % aufweist. Werden nun durch die Zuführungsvorrichtungen 5 nur 88 % der Verbrennungsluft zu den Brennern 3 geführt und die zuvor abgezweigten 12 % stirnseitig in die Rauchgastunnel 4 geführt, dann stellt sich an den Brennern 3 wieder ein Lambda-Wert von 1,1 ein und die Stickoxidemission sinkt wieder auf 24 ppm, obwohl die Rauchgasmenge, die den nachgeschalteten Wärmetauschern zugeführt wird, den betrieblichen Erfordernissen der Gesamtanlage entsprechend, angehoben wurde. Hierbei kommt auch eine Differenzmengenmessung zwischen Gesamtluft und Luft für das Zusatzgas zum Einsatz, damit die Anteile jederzeit bekannt sind und die gewünschten Einstellungen der Anlage vorgenommen werden können.

Vorteile, die sich aus der Erfindung ergeben:
- Das Verfahren und die Ausrüstungen können in bestehende Industrieanlagen leicht integriert und nachgerüstet werden.
- Die optimale Wärmeausnutzung der im Rauchgas enthaltenen Energie im Teillastbetrieb wird gewährleistet.
- Es wird ein an sich bereits etabliertes Verfahren angewendet.
- Reduktion der Stickoxidentstehung und damit erhöhte Umweltverträglichkeit.
- Eine aufwendige Behandlung von Stickoxid-haltigen Abgasströmen ist nicht mehr notwendig, was die Anlage insgesamt wirtschaftlicher macht.

### Bezugszeichenliste

- 1: Befeuerungsraum
- 2: Spaltrohre
- 3: Brenner
- 4: Rauchgastunnel
- 5: Zuführungsvorrichtungen für Luft
- 6: Zusatzgas
- 7: Sammler
- 8: Rauchgaskanal
- 9: Schornstein
- 10: Umgebungsluft
- 11: erster Luftvorwärmer
- 12: Fördergebläse
- 13: zweiter Luftvorwärmer
- 14: Wärmetauscher
- 15: Wärmetauscher
- 16: Abzweigstelle
- 17: Abzweigstelle
- 18: Abzweigstelle
- 19: vorgewärmtes Zusatzgas
- 20: Restgas
- 21: Zusatzgas
- 22: Fördergebläse
- 23: Vorwärmer
- 24: Verlängerungen der Zuführungseinrichtungen für Luft
- 25: Einrichtungen zur Regulation des Luftstroms
- 26: Abzweigstelle

## Patentansprüche

1. Reaktor zur katalytischen Primärreformierung von Kohlenwasserstoffen mit Wasserdampf unter erhöhtem Druck, aufweisend ein Spaltrohrsystem und einen Befeuerungsraum (1),
- wobei das Spaltrohrsystem als Reaktionsraum eine Vielzahl von vertikalen Rohren (2), welche in Reihen angeordnet und zum Füllen mit Katalysator geeignet sind und Einrichtungen zum Zuführen von zu reformierenden Kohlenwasserstoffen und Wasserdampf zum Reaktionsraum sowie Einrichtungen zum Abführen reformierten Synthesegases aus dem Reaktionsraum besitzt,
- dabei weiterhin im oberen Bereich des Befeuerungsraums (1) aufweisend eine Vielzahl von parallel zueinander angeordneten Befeuerungseinrichtungen,
- die jeweils zwischen den Spaltrohren (2) angeordnet sind und die aus einer Vielzahl in Reihe angeordneter Brenner (3) bestehen,
- wobei die Brenner (3) im Wesentlichen abwärts gerichtete Flammen erzeugen können,
- welche geeignet sind, die oben genannten Rohre (2) zu beheizen,
- die jeweiligen Befeuerungseinrichtungen über Zuführungsvorrichtungen (5) mit Heizgas und Luft gespeist werden, wobei die Luft aus den jeweiligen Zuführungen abgezogen wird,
- sich im unteren Bereich des Befeuerungsraumes eine Vielzahl von im Wesentlichen waagerecht angeordneten, parallel zueinander und rechtwinklig zu den vertikalen Spaltrohren verlaufenden Rauchgastunneln (4) aus keramischen Werkstoffen zum Abzug der Rauchgase durch Öffnungen in den Seitenwänden der Rauchgastunnel (4) befinden,
- die jeweils einer Reihe aus Befeuerungseinrichtungen zugeordnet sind, und
- die Rauchgastunnel (4) am Austritt des Befeuerungsraumes in Vorrichtungen münden, die zur Wärmerückgewinnung mit Wärmetauschern (14, 15) versehen sind,
**dadurch gekennzeichnet, dass**
- stirnseitig jeder einzelne der Rauchgastunnel (4) in Strömungsrichtung der abgezogenen Rauchgase Zuführungseinrichtungen für ein Zusatzgas (6), welches sowohl Sauerstoff als auch ein nichtbrennbares Gas enthält, aufweist, so dass das in die Rauchgastunnel geleitete Zusatzgas (6) den Rauchgastunnel (4) auf ganzer Länge des Befeuerungsraums durchläuft, und
- wobei jede einzelne der Zuführungseinrichtungen für das Zusatzgas (6) Vorrichtungen zur Regulation (25) des Zusatzgasstroms aufweist, und
- wobei die Zuführungseinrichtungen (5) von Luft zum Brenner (3) Verlängerungen (24) aufweisen, die in die Zuführungseinrichtungen für Zusatzgas in die Rauchgastunnel münden.

2. Vorrichtung nach Anspruch 1, **dadurch gekennzeichnet, dass** eine Abzweigung (18) von Luft aus dem Weg der Luftvorwärmung der Luft, die als Verbrennungsluft vorgesehen ist, zu den Zuführstellen (24) für Zusatzgas (6) eingerichtet ist.

3. Vorrichtung nach Anspruch 2, **dadurch gekennzeichnet, dass** eine Druckerhöhungsvorrichtung für Zusatzgas (6) nach der Abzweigung (18) von Luft aus dem Weg der Luftvorwärmung der Luft, die als Verbrennungsluft vorgesehen ist, eingerichtet ist.

4. Vorrichtung nach Anspruch 3, **dadurch gekennzeichnet, dass** die Verlängerungen (24) Klappen oder Ventile (25) aufweisen.

5. Verfahren zur katalytischen Primärreformierung von Kohlenwasserstoffen mit Wasserdampf unter erhöhtem Druck mittels eines Reaktors nach Anspruch 1, aufweisend ein Spaltrohrsystem und einen Befeuerungsraum, wobei
- im Spaltrohrsystem, das mit einem Katalysatormaterial befüllt ist, zu reformierende Kohlenwasserstoffe mittels Wasserdampf zu Synthesegas umgesetzt werden,
- wobei das Spaltrohrsystem mittels einer Vielzahl von Befeuerungseinrichtungen aufgeheizt wird, die jeweils zwischen den Spaltrohren angeordnet sind und welche aus einer Vielzahl von in Reihe angeordneten Brennern bestehen, wobei die Brenner im Wesentlichen abwärts gerichtete Flammen erzeugen können,
- die jeweiligen Befeuerungseinrichtungen mit Heizgas und Luft gespeist werden, wobei die Luft aus Zuführungen abgezogen wird, und
- das entstehende Rauchgas den Befeuerungsraum von oben nach unten durchströmt und im unteren Bereich des Befeuerungsraumes in im Wesentlichen waagerecht angeordnete, parallel zueinander, rechtwinklig zu den vertikalen Spaltrohren verlaufende und jeweils einer Befeuerungseinrichtung zugeordnete Rauchgastunnel aus keramischem Werkstoff durch Öffnungen in den Seitenwänden der Rauchgastunnel eintritt, und
- das Rauchgas am Austritt des Befeuerungsraums in Vorrichtungen geleitet wird, die zur Wärmerückgewinnung genutzt werden,
**dadurch gekennzeichnet, dass**
- stirnseitig in jeden einzelnen der Rauchgastunnel in Strömungsrichtung der abgezogenen Rauchgase durch Zuführungseinrichtungen ein vorgewärmtes Zusatzgas, welches sowohl Sauerstoff als auch ein nichtbrennbares Gas enthält, eingeleitet wird, so dass das in die Rauchgastunnel geleitete Zusatzgas den Rauchgastunnel auf ganzer Länge des Befeuerungsraums durchläuft, und
- wobei die jeweils zugeführte Menge an Zusatzgas jeweils geregelt wird, und
- wobei als Zusatzgas Brennerluft abgezweigt wird.

6. Verfahren nach Anspruch 5, **dadurch gekennzeichnet, dass** als Zusatzgas Luft eingesetzt wird.

7. Verfahren nach Anspruch 5 oder 6, **dadurch gekennzeichnet, dass** die Menge des Zusatzgases, das in die Rauchgastunnel geleitet wird, über Klappen oder Ventile eingestellt wird.

8. Verfahren nach einem der Ansprüche 5 bis 7, **dadurch gekennzeichnet, dass** eine Differenzmengenmessung zwischen Gesamtluft und Luft für das Zusatzgas für die Rauchgastunnel durchgeführt wird.

## Claims

1. Reactor for catalytic primary reforming of hydrocarbons using steam at elevated pressure, having a cracking tube system and a firing chamber (1),
- wherein the cracking tube system, as reaction chamber, possesses a multiplicity of vertical tubes (2) which are arranged in rows and are suitable for being filled with catalyst and possesses appliances for feeding hydrocarbons that are to be reformed and steam to the reaction chamber, and also appliances for removing reformed synthesis gases from the reaction chamber,
- in this case, additionally having in the upper region of the firing chamber (1) a multiplicity of firing appliances arranged in parallel to one another,
- each of which are arranged between the cracking tubes (2) and which consist of a multiplicity of burners (3) arranged in series,
- wherein the burners (3) can generate substantially downwards directed flames,
- which are suitable for heating the abovementioned tubes (2),
- the respective firing appliances are fed with heating gas and air via feed devices (5), wherein the air is withdrawn from the respective feeds,
- a multiplicity of substantially horizontally arranged flue gas tunnels (4) that proceed in parallel to one another and at right angles to the vertical cracking tubes and are made of ceramic materials for withdrawal of the flue gases through the openings in the side walls of the flue gas tunnels (4) are located in the lower region of the firing chamber,
- each of which are assigned to a series of firing appliances, and
- the flue gas tunnels (4), at the exit of the firing chamber, open out into devices which are provided with heat exchangers (14, 15) for heat recovery,
**characterized in that**
- at the end side each individual flue gas tunnel (4) in the direction of flow of the withdrawn flue gases has feed appliances for an additional gas (6) which contains not only oxygen but also an incombustible gas, in such a manner that the additional gas (6) passed into the flue gas tunnels passes through the flue gas tunnel (4) along the entire length of the firing chamber, and
- wherein each individual one of the feed appliances for the additional gas (6) has devices for the regulation (25) of the additional gas stream, and
- wherein the feed appliances (5) of air to the burner (3) have elongations (24) that open out into the feed appliances for additional gas into the flue gas tunnels.

2. Device according to Claim 1, **characterized in that** a branch point (18) is furnished of air from the path of the air preheating of air, which is provided as combustion air, to the feed points (24) for additional gas (6).

3. Device according to Claim 2, **characterized in that** a pressure boosting device for additional gas (6) is furnished downstream of the branch point (18) of air from the path of the air preheating of air, that is provided as combustion air.

4. Device according to Claim 3, **characterized in that** the elongations (24) have flaps or valves (25).

5. Process for the catalytic primary reforming of hydrocarbons using steam at elevated pressure by means of a reactor according to Claim 1, having a cracking tube system and a firing chamber, wherein,
- in the cracking tube system that is filled with a catalyst material, hydrocarbons that are to be reformed are converted to synthesis gas by means of steam,
- wherein the cracking tube system is heated by means of a multiplicity of firing appliances that are each arranged between the cracking tubes and consist of a multiplicity of series-arranged burners, wherein the burners can generate substantially downwards directed flames,
- the respective firing appliances are fed with heating gas and air, wherein the air is withdrawn from feeds, and
- the resultant flue gas flows through the firing chamber from top to bottom, and in the lower region of the firing chamber enters into substantially horizontally arranged flue gas tunnels proceeding parallel to one another and at right angles to the vertical cracking tubes, and which are each assigned to a firing appliance, and are made of a ceramic material through openings in the side walls of the flue gas tunnels, and
- the flue gas is passed at the exit of the firing chamber into devices which are used for heat recovery,
**characterized in that**
- at the end side into each individual one of the flue gas tunnels in the direction of flow of the withdrawn flue gases, through feed appliances, a preheated additional gas which contains not only oxygen but also an incombustible gas is introduced in such a manner that the additional gas passed into the flue gas tunnels passes through the flue gas tunnel along the entire length of the firing chamber, and
- wherein the amount of additional gas fed in each case is controlled in each case, and
- wherein, as additional gas, burner air is branched off.

6. Process according to Claim 5, **characterized in that**, as additional gas, air is used.

7. Process according to Claim 5 or 6, **characterized in that** the amount of the additional gas that is passed into the flue gas tunnels is set via flaps or valves.

8. Process according to any one of Claims 5 to 7, **characterized in that** a differential rate measurement between total air and air for the additional gas for the flue gas tunnels is carried out.

## Revendications

1. Réacteur pour le reformage primaire catalytique d'hydrocarbures avec de la vapeur d'eau sous pression élevée, comprenant un système de tubes de clivage et une chambre de chauffage (1),
- le système de tubes de clivage comprenant en tant que chambre de réaction une pluralité de tubes verticaux (2), qui sont agencés en séries et qui sont appropriés pour le remplissage avec un catalyseur, et des dispositifs pour l'introduction d'hydrocarbures à reformer et de vapeur d'eau dans la chambre de réaction, ainsi que des dispositifs pour le déchargement de gaz de synthèse reformés de la chambre de réaction,
- comprenant en outre dans la zone supérieure de la chambre de chauffage (1) une pluralité de dispositifs de chauffage agencés parallèlement les uns aux autres,
- qui sont agencés à chaque fois entre les tubes de clivage (2) et qui sont constitués d'une pluralité de brûleurs (3) agencés en série,
- les brûleurs (3) pouvant générer des flammes principalement dirigées vers le bas,
- qui sont appropriées pour chauffer les tubes (2) mentionnés précédemment,
- les dispositifs de chauffage respectifs étant alimentés par des dispositifs d'alimentation (5) avec un gaz de chauffage et de l'air, l'air étant soutiré des conduites d'alimentation respectives,
- une pluralité de tunnels de gaz de fumée (4) en matériaux céramiques, essentiellement horizontaux, parallèles les uns aux autres et perpendiculaires aux tubes de clivage verticaux, pour le soutirage des gaz de fumée par des ouvertures dans les parois latérales des tunnels de gaz de fumée (4) se trouvant dans la zone inférieure de la chambre de chauffage,
- qui sont chacun associés à une série de dispositifs de chauffage, et
- les tunnels de gaz de fumée (4) débouchant à la sortie de la chambre de chauffage dans des dispositifs qui sont munis d'échangeurs de chaleur (14, 15) pour la récupération de la chaleur,
**caractérisé en ce que**
- chaque tunnel de gaz de fumée (4) individuel comprend à l'avant dans la direction d'écoulement des gaz de fumée soutirés des dispositifs d'introduction pour un gaz auxiliaire (6), qui contient aussi bien de l'oxygène qu'un gaz non combustible, de sorte que le gaz auxiliaire (6) introduit dans les tunnels de gaz de fumée traverse les tunnels de gaz de fumée (4) sur la longueur entière de la chambre de chauffage, et
- chaque dispositif d'introduction individuel pour le gaz auxiliaire (6) comprenant des dispositifs pour la régulation (25) du courant de gaz auxiliaire, et
- les dispositifs d'introduction (5) d'air dans le brûleur (3) comprenant des prolongations (24), qui débouchent dans les dispositifs d'introduction pour le gaz auxiliaire dans les tunnels de gaz de fumée.

2. Dispositif selon la revendication 1, **caractérisé en ce qu'**une déviation (18) d'air depuis le trajet de préchauffage de l'air, qui est prévu en tant qu'air de combustion, vers les emplacements d'introduction (24) pour le gaz auxiliaire (6) est installée.

3. Dispositif selon la revendication 2, **caractérisé en ce qu'**un dispositif d'augmentation de la pression pour le gaz auxiliaire (6) est installé après la déviation (18) de l'air du trajet de préchauffage de l'air, qui est prévu en tant qu'air de combustion.

4. Dispositif selon la revendication 3, **caractérisé en ce que** les prolongations (24) comprennent des clapets ou des vannes (25).

5. Procédé de reformage primaire catalytique d'hydrocarbures avec de la vapeur d'eau sous pression élevée au moyen d'un réacteur selon la revendication 1, comprenant un système à tubes de clivage et une chambre de chauffage, selon lequel
- dans le système de tubes de clivage, qui est rempli avec un matériau catalytique, des hydrocarbures à reformer sont mis en réaction avec de la vapeur d'eau pour former un gaz de synthèse,
- le système de tubes de clivage étant chauffé au moyen d'une pluralité de dispositifs de chauffage, qui sont agencés à chaque fois entre les tubes de clivage et qui sont constitués d'une pluralité de brûleurs agencés en série, les brûleurs pouvant générer des flammes principalement dirigées vers le bas,
- les dispositifs de chauffage respectifs étant alimentés avec un gaz de chauffage et de l'air, l'air étant soutiré de conduites d'alimentation, et
- le gaz de fumée formé traversant la chambre de chauffage du haut vers le bas et, dans la zone inférieure de la chambre de chauffage, entrant dans des tunnels de gaz de fumée en un matériau céramique essentiellement horizontaux, parallèles les uns aux autres, perpendiculaires aux tubes de clivage verticaux et chacun associés à un dispositif de chauffage, par des ouvertures dans les parois latérales des tunnels de gaz de fumée, et
- le gaz de fumée étant conduit à la sortie de la chambre de chauffage dans des dispositifs qui sont utilisés pour la récupération de la chaleur, **caractérisé en ce que**
- un gaz auxiliaire (6), qui contient aussi bien de l'oxygène qu'un gaz non combustible, est introduit à l'avant dans chaque tunnel de gaz de fumée individuel dans la direction d'écoulement des gaz de fumée soutirés par des dispositifs d'introduction, de sorte que le gaz auxiliaire introduit dans les tunnels de gaz de fumée traverse les tunnels de gaz de fumée sur la longueur entière de la chambre de chauffage, et
- la quantité de gaz auxiliaire introduite à chaque fois est à chaque fois régulée, et
- de l'air de combustion est dérivé en tant que gaz auxiliaire.

6. Procédé selon la revendication 5, **caractérisé en ce que** de l'air est utilisé en tant que gaz auxiliaire.

7. Procédé selon la revendication 5 ou 6, **caractérisé en ce que** la quantité de gaz auxiliaire qui est introduite dans les tunnels de gaz de fumée est ajustée par des clapets ou des vannes.

8. Procédé selon l'une quelconque des revendications 5 à 7, **caractérisé en ce qu'**une mesure de la différence de quantité entre l'air total et l'air pour le gaz auxiliaire pour les tunnels de gaz de fumée est réalisée.
